# FASCICULE DE BREVET EUROPEEN

(11) **EP 3 570 218 B1**
(45) Date de publication et mention de la délivrance du brevet: **21.10.2020**
(21) Numéro de dépôt: 19174234.5
(22) Date de dépôt: 13.05.2019
(51) Int. Cl.: G06K 19/077, G09F 3/03, G09F 3/08, G09F 3/10, G06K 17/00

(54) **CARTE D'EMBARQUEMENT MUNIE D'UNE ÉTIQUETTE RFID**
BORDKARTE MIT EINEM RFID-ETIKETT
BOARDING CARD PROVIDED WITH AN RFID TAG

(30) Priorité: 14.05.2018 FR 1854002
(43) Date de publication de la demande: 20.11.2019
(73) Titulaire: France-Manche, 75008 Paris (FR)
(72) Inventeur: LENGLIN, Hervé, 62231 BLERIOT-PLAGE (FR); EGU, Oscar, 69006 Lyon (FR); PAMART, Sylvain, 62100 Calais (FR)
(74) Mandataire: Cabinet Beau de Loménie

(56) Documents cités:
- JP-A- 2005 267 613
- JP-A- 2010 205 164
- KR-A- 20110 073 624
- US-A1- 2010 039 259
- US-A1- 2015 154 489
- TONI MISKOVIC ET AL: "RFID Control System for the Embarkation/Disembarkation of Passengers and Vehicles on/from Ferries", TRANSACTIONS ON MARITIME SCIENCE, vol. 5, no. 2, 21 octobre 2016 (2016-10-21), pages 161-171, XP055544912, ISSN: 1848-3305, DOI: 10.7225/toms.v05.n02.007
- William Frick: "RFID Rear View Mirror Hang Tag RFID Product @BULLET UV Stable @BULLET Custom Printed & Programmed @BULLET Long Range RFID Technical Data Sheet Part: #WF-SM-0042 General Description RFID Rear View Mirror Hang Tag Material Description", , 31 décembre 2015 (2015-12-31), XP055545231, Extrait de l'Internet: URL:https://www.fricknet.com/images/catalo g/pdf/RFID_Rear_View_Mirror_Hang_Tag.pdf [extrait le 2019-01-21]

## Description

### Arrière-plan de l'invention

La présente invention concerne le domaine de la gestion de passagers dans un terminal, tel qu'un terminal aéroportuaire, ferroviaire ou bien encore maritime.

La présente invention concerne plus précisément les documents d'identification du passager valant autorisation d'embarquer à bord du moyen de transport. Un tel document est généralement dénommé « carte d'embarquement ».

Dans les terminaux aéroportuaires, une carte d'embarquement est généralement délivrée au moment de l'enregistrement du passager et se présente sous la forme d'une feuille sur laquelle sont imprimées des mentions relatives au passager et au vol sur lequel il est autorisé à embarquer. Ces mentions incluent généralement les nom et prénom du passager, la date, l'heure et le numéro du vol, la porte d'embarquement, etc. Il est également connu d'imprimer un code barre sur la feuille afin d'automatiser la lecture des informations imprimées sur la feuille.

Le même principe est utilisé dans certains terminaux ferroviaires et maritimes.

Cette carte d'embarquement doit être présentée aux contrôleurs afin que ces derniers puissent lire les informations inscrites sur la carte d'embarquement, soit visuellement, soit à l'aide d'un lecteur de code-barres. Dans tous les cas de figure, la carte d'embarquement doit être à proximité immédiate du contrôleur.

Un tel mode de lecture est particulièrement malcommode lorsqu'il est mis en œuvre dans les terminaux de ferrys ou de services ferroviaires d'auto-train, dans lesquels le passager voyage avec automobile et où la carte d'embarquement peut se trouver dans le véhicule. Dans ce cas, le passager doit arrêter son véhicule, parfois en sortir, pour ensuite présenter la carte d'embarquement au contrôleur, ce qui a pour inconvénient de ralentir le flux de passagers.

Le document « RFID Control System for the Embarkation/disembarkation of Passengers and Vehicles on/from Ferries » de Toni Miskovic et Al (ISSN:1848-3305) divulgue une carte d'embarquement selon le préambule de la revendication 1.

### Objet et résumé de l'invention

Un but de la présente invention est de proposer une carte d'embarquement qui permet notamment de fluidifier les contrôles de passagers et mieux suivre les flux de passagers, notamment dans les modes de transport où le passager voyage avec son véhicule.

Pour ce faire, l'invention porte sur une carte d'embarquement selon la revendication 1 comportant une feuille qui présente une première face et une seconde face opposée à la première face.

De façon caractéristique, la feuille présente :
une première partie comprenant un dispositif de fixation pour fixer la carte d'embarquement à un support,
une seconde partie comprenant une étiquette RFID comportant une mémoire et une antenne.

Le support peut être par exemple une partie du véhicule, tel qu'une vitre ou toute autre partie du véhicule. Le support est de préférence le pare-brise du véhicule, encore de préférence la face intérieure du pare-brise.

L'étiquette RFID selon l'invention comporte une puce RFID, connue par ailleurs, qui comporte une mémoire capable de stocker des informations, ainsi qu'une antenne qui permet de lire à distance les informations contenues dans la mémoire à l'aide d'un lecteur RFID, connu par ailleurs.

La lecture et le traitement des informations contenues dans la mémoire peuvent donc être réalisée rapidement à l'aide d'un lecteur RFID qui peut être couplé à un ordinateur pour le traitement des informations relatives à l'embarquement. Un intérêt de l'étiquette RFID est qu'elle offre une grande distance de lecture, même lorsque la carte d'embarquement se situe à l'intérieur du véhicule.

Le passager n'a donc plus à présenter sa carte d'embarquement au contrôleur.

Tout ceci permet de contrôler plus rapidement les passagers et, par voie de conséquence, de fluidifier le flux de passagers véhiculés au sein du terminal.

De préférence, la feuille comporte également au moins une zone, située dans la première partie et/ou dans la seconde partie, dans laquelle sont imprimées des informations à destination du passager, tel que par exemple des consignes d'utilisation, de transport, ou de sécurité.

De préférence, les première et deuxième parties sont disposées aux extrémités longitudinales de la feuille.

Avantageusement, la mémoire contient des informations relatives à un passager. La mémoire contient en outre, de façon préférentielle, des informations relatives au véhicule du passager, ainsi que des informations relatives au voyage (identifiant du train, ferry ou avion, et de l'heure de départ..)

Selon l'invention, le dispositif de fixation comporte une bande adhésive présentant une face adhésive et une face non-adhésive, opposée à la face adhésive.

La première partie présente un trou qui est recouvert par la bande adhésive, la face adhésive étant fixée à la première face de la feuille de sorte qu'une partie de la face adhésive débouche dans la seconde face de la feuille.

La surface de la bande adhésive est préférentiellement plus grande que la surface du trou de façon à recouvrir toute la surface du trou.

On comprend donc que la carte d'embarquement est fixée au support, par exemple par collage de ladite partie de face adhésive à la face intérieure du pare-brise du véhicule du passager.

Pour masquer la partie de la face adhésive avant qu'elle soit collée au support, la carte d'embarquement en outre et de façon préférentielle un opercule qui est amovible. L'opercule comporte une face de protection coopérant avec ladite partie de la face adhésive qui débouche dans la seconde face de la feuille. La face de protection est configurée pour être décollée facilement de la partie de la face adhésive qui débouche dans la seconde face de la feuille. Pour ce faire, la face de protection comporte par exemple un film de silicone.

De préférence, l'opercule présente les mêmes dimensions que le trou. Encore de préférence, l'opercule comporte une plus grande dimension qui est sensiblement égale à la moitié de la largeur de ladite feuille. Un intérêt est d'assurer une surface de fixation suffisante au regard des dimensions de la feuille.

De préférence, la bande adhésive est transparente, ce qui permet de rendre lisibles les informations inscrites à proximité du trou.

Selon un mode de réalisation préférentiel, l'étiquette RFID est fixée sur la première face de la feuille. De préférence, l'étiquette RFID comporte une bande collante solidaire de l'antenne, qui est collée à la première face de la feuille.

Selon une variante, la feuille comporte deux couches collées l'une à l'autre, et l'étiquette RFID est disposée entre les deux couches.

Avantageusement, la feuille présente une direction longitudinale, et l'antenne de l'étiquette RFID présente une plus grande longueur qui s'étend selon la direction longitudinale de la feuille. Grâce à cette conformation, l'antenne offre une grande distance de lecture permettant une lecture des informations contenues dans la mémoire, même lorsque la carte d'embarquement est disposée à l'intérieur du véhicule.

De préférence, mais non exclusivement, l'étiquette RFID s'étend sensiblement au milieu de la largeur de la seconde partie de la feuille.

Il en est de même de la bande adhésive. Selon un autre mode de réalisation, la première partie présente la forme d'un crochet qui constitue le dispositif de fixation. Ce crochet peut être par exemple monté sur une patte de maintien d'un rétroviseur, par exemple un rétroviseur intérieur de voiture.

L'invention concerne par ailleurs une installation d'embarquement comportant :
au moins une carte d'embarquement selon l'invention, la mémoire comportant des informations relatives à un passager ;
une zone d'embarquement comprenant plusieurs sous-zones munies de lecteurs RFID aptes à lire les informations contenues dans la mémoire, dites les informations lues ;
des moyens de localisation reliés aux lecteurs RFID des sous-zones pour détecter la présence de la carte d'embarquement dans l'une des sous-zones à l'aide des informations lues.

Aussi l'invention permet-elle de localiser la carte d'embarquement au sein de la zone d'embarquement grâce aux lecteurs RFID qui transmettent les informations lues aux moyens de localisation. Cette localisation intervient lorsque la carte d'embarquement pénètre dans la zone de lecture de l'un des lecteurs RFID. Les moyens de localisation déterminent alors que la carte d'embarquement est située dans la sous-zone associée au lecteur RFID qui a lu les informations contenues dans la mémoire de la carte d'embarquement. De préférence, les lecteurs RFID transmettent aux moyens de localisation les informations lues ainsi que leurs identifiants.

Dans la mesure où la carte d'embarquement est fixée au véhicule, on comprend que les moyens de localisation permettent de localiser le véhicule.

L'invention permet donc de localiser et suivre le déplacement du passager, ou de son véhicule, au sein de la zone d'embarquement.

De préférence, l'installation d'embarquement est une installation d'embarquement ferroviaire, le passager se déplaçant dans la zone d'embarquement au volant de son véhicule jusqu'au quai d'embarquement dans la navette ferroviaire.

Avantageusement, l'installation d'embarquement comporte en outre des moyens de transmission pour transmettre à un récepteur d'un ordinateur portable des données qui sont fonction de la sous-zone où la carte d'embarquement a été localisée par les moyens de localisation.

L'installation d'embarquement selon l'invention permet donc d'envoyer au passager, muni de l'ordinateur portable, des informations d'intérêts en lien avec la sous-zone où sa carte d'embarquement est localisée par les moyens de localisation. Par exemple, si la carte d'embarquement est détectée comme se trouvant dans une sous-zone où sont situés des restaurants, les moyens de transmission pourront envoyer sur l'ordinateur portable la liste des restaurants situés à proximité.

Si le passager, ou son véhicule, est détecté comme se trouvant à proximité d'une sous-zone de contrôle, les moyens de transmission pourront envoyer sur l'ordinateur portable des consignes à respecter pour faciliter les opérations de contrôle.

Bien évidemment, sans sortir du cadre de la présente invention, d'autres types d'informations pourront être envoyés sur l'ordinateur portable du passager.

Au sens de la présente invention, on entend par « ordinateur portable » tout dispositif de communication portable muni d'une unité de calcul, tel que par exemple, mais non exclusivement, une ordinateur personnel, une tablette, ou bien encore un ordiphone.

De multiples applications sont dès lors possible, comme par exemple guider le passager au sein de la zone d'embarquement ou bien lui adresser un message sur son ordinateur portable s'il tarde trop à se rendre à la porte d'embarquement.

Avantageusement, au moins l'une des sous-zones, dite la première sous-zone, comporte une barrière associée au lecteur RFID de la première sous-zone, et l'installation comporte en outre des moyens de commande pour actionner la barrière lorsque la carte d'embarquement est localisée dans la première sous-zone par les moyens de localisation.

On comprend donc que lorsque l'utilisateur, muni de la carte d'embarquement est à proximité du lecteur RFID de la première sous-zone, ledit lecteur RFID lit les informations contenues dans la mémoire et les transmet aux moyens de commande. Les moyens de commande vérifient si le passager associé à la carte d'embarquement est autorisé à franchir la barrière. Dans l'affirmative, les moyens de commande envoient un signal pour actionner la barrière afin de l'ouvrir. Les moyens de commande comportent de préférence un serveur.

Sans sortir du cadre de la présente invention, l'installation d'embarquement peut comporter plusieurs barrières dont l'ouverture peut être commandée à l'aide de la carte d'embarquement.

### Brève description des dessins

L'invention sera mieux comprise à la lecture de la description qui suit de modes de mise en œuvre de l'invention donnés à titre d'exemples non limitatifs, en référence aux dessins annexés, sur lesquels :
- la figure **1** est une vue en perspective de la carte d'embarquement selon un premier mode de réalisation de l'invention, illustrant face recto de la carte ;
- la figure **2** illustre la face verso de la carte d'embarquement de la figure **1** ;
- la figure **3** est une vue de côté de la carte d'embarquement de la figure **1** ;
- la figure **4** est une vue de côté d'une variante de la carte d'embarquement de la figure **1** ;
- la figure **5** est une variante de la figure **1** dans laquelle le dispositif de fixation est un crochet ;
- la figure **6** est une vue schématique d'une installation d'embarquement selon l'invention comportant une zone d'embarquement et quatre sous-zones ; et
- la figure **7** est une vue de détail de l'installation d'embarquement de la figure **5**, montrant un véhicule muni de la carte d'embarquement de la figure **1**, le véhicule étant situé à proximité d'une barrière.

### Description détaillée de l'invention

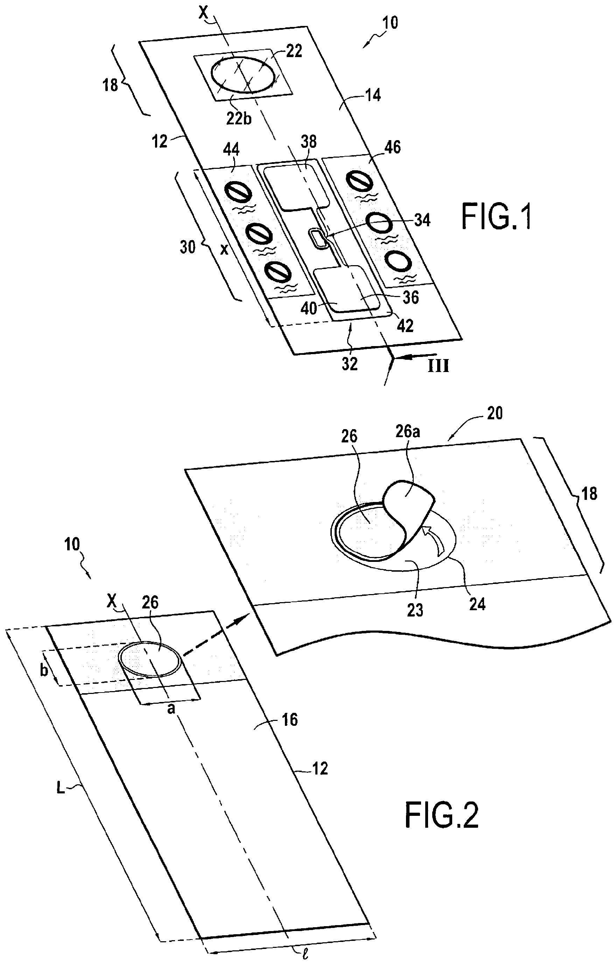

A l'aide des figures **1** à **3**, on va décrire un mode de réalisation préférentiel d'une carte d'embarquement **10** conforme à la présente invention.

La carte d'embarquement **10** comporte une feuille **12**, par exemple en carton, qui présente une première face **14** et une seconde face **16** opposée à la première face **14.** Dans cet exemple, la feuille présente une forme rectangulaire s'étendant selon une direction longitudinale **X.** La feuille présente une longueur **L** de l'ordre de 20 cm, et une largeur **l** de l'ordre de 8 cm.

Conformément à l'invention, la feuille **12** présente une première partie **18** qui comprend un dispositif de fixation **20.** Comme il sera expliqué ci-dessous, le dispositif de fixation **20** permet de fixer la carte d'embarquement **10** à un support. Dans cet exemple, le support est constitué par la face intérieure d'un pare-brise d'un véhicule **V**. On comprend donc que la carte d'embarquement, qui a été remise au passager, est associée au véhicule **V** du passager.

La fixation au support est réalisée par collage.

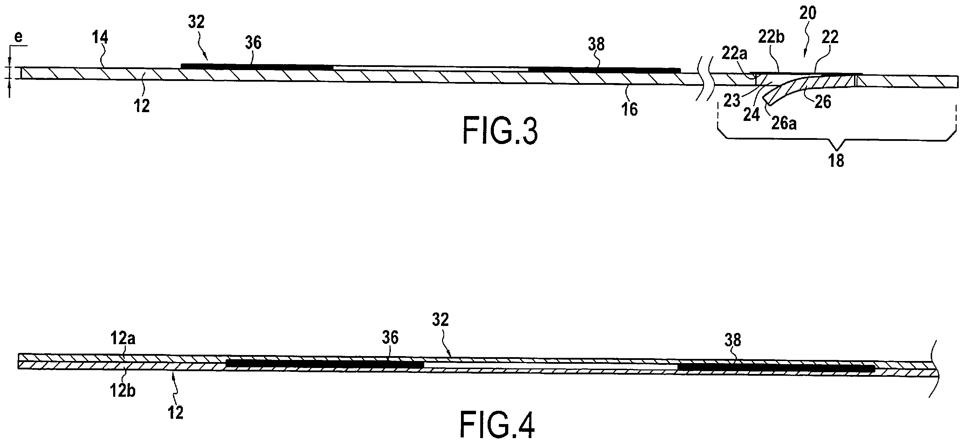

A cet effet, le dispositif de fixation **20** comporte une bande adhésive **22**, qui est dans cet exemple transparente. La bande adhésive **22**, mieux visible sur la figure **3**, présente une face adhésive **22**a et une face non adhésive **22**b, opposée à la face adhésive **22**a.

La première partie **18** présente un trou **24**, ménagé dans l'épaisseur **e** de la feuille, qui est recouvert par la bande adhésive **22**. La face adhésive **22**a est collée à la première face **14** de la feuille **12** de sorte qu'une partie **23** de la face adhésive **22**a débouche dans la seconde face **16** de la feuille **12.**

Avant la fixation de la carte d'embarquement au support, la partie **23** de la face adhésive **22**a qui débouche dans la seconde face de la feuille est recouverte d'un opercule **26.** Pour pouvoir fixer la carte d'embarquement, le passager doit retirer l'opercule afin de découvrir la partie **23** collante de la face adhésive **22**a**.**

Cet opercule **26** comporte une face de protection **26**a, munie d'un film de silicone, qui masque ladite partie **23** avant la fixation de la carte d'embarquement au support.

Comme on le voit sur la figure **2**, l'opercule **26** présente sensiblement les mêmes dimensions que le trou **24.** Il présente également la même forme ovale que le trou.

Plus précisément, l'opercule **26** comporte une plus grande dimension **a** qui est sensiblement égale à la moitié de la largeur **l** de la feuille. L'opercule comporte par ailleurs une plus petite dimension **b**, transversale à la plus grande dimension **a**, qui correspond environ aux deux tiers de la plus grande dimension **a.** Dans cet exemple, la plus grande dimension est de l'ordre de 35 mm, tandis que la plus petite dimension est de l'ordre de 25 mm.

Sans sortir du cadre de la présente invention, d'autres formes de trous et d'opercules pourraient être utilisées.

Par ailleurs, comme on le constate sur les figures **1** et **2**, la première partie **18** se situe en une première extrémité longitudinale de la feuille **12.**

Conformément à l'invention, la feuille **12** comporte en outre une seconde partie **30** disposée dans le prolongement de la première partie **18.** La seconde partie **30** comprend une étiquette RFID **32** qui est, de façon connue, munie d'une mémoire **34** reliée à une antenne **36.** Cette étiquette RFID **32** est également appelée « radio-étiquette ».

Dans cet exemple, l'antenne **36** de l'étiquette RFID **32** présente une plus grande longueur **x** qui s'étend selon la direction longitudinale de la feuille.

L'antenne **36** est composée de deux portions **38, 40** qui s'étendent selon la direction longitudinale **X** de part et d'autre de la mémoire **34.** Dans le mode de réalisation de la figure **1**, l'antenne **36** est collée à une bande collante **42** qui est elle-même collée à la première partie.

L'étiquette RFID **32** s'étend sensiblement au milieu de la largeur **l** de la seconde partie **30** de la feuille **12.** Dans cet exemple, de part et d'autre de l'étiquette RFID **32**, on trouve des zones d'impression **44, 46** qui contiennent en particulier des consignes écrites destinées au passager.

Dans le premier mode de réalisation illustré aux figures **1** à **3****,** l'étiquette RFID est fixée sur la première face **14** de la feuille **12** ; il est également possible en variante d'encapsuler l'étiquette RFID **32** à l'intérieur de la feuille **12.** Pour ce faire, comme illustré en figure **4**, la feuille **12** comporte deux couches **12a, 12b** collées l'une à l'autre, l'étiquette RFID **32** étant disposée entre les deux couches **12a, 12b.**

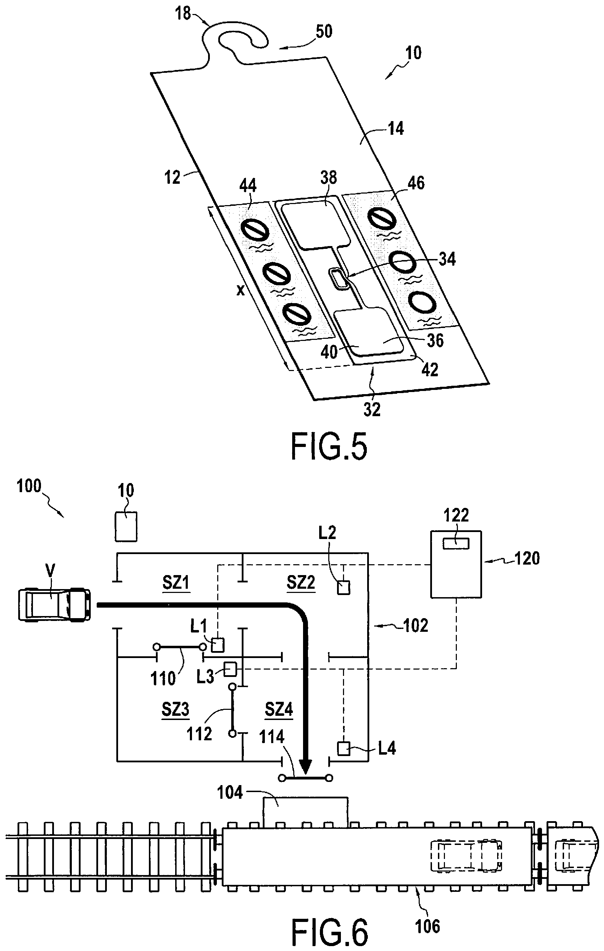

En figure **5****,** on a illustré une variante du dispositif de fixation de la figure **1****.** Dans cette variante, la première partie **18** présente la forme d'un crochet **50** qui constitue le dispositif de fixation.

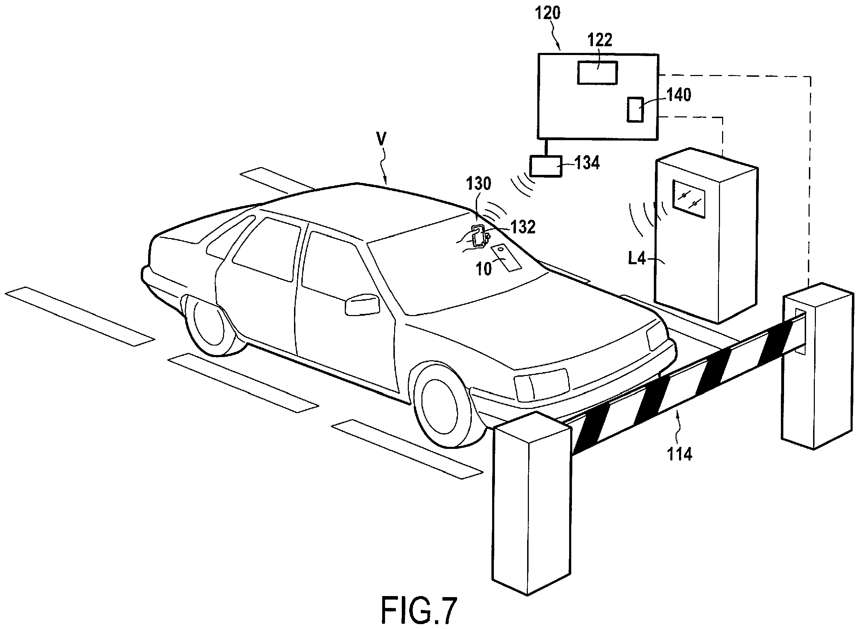

A l'aide des figures **6** et **7****,** on va maintenant décrire une installation d'embarquement **100,** conforme à la présente invention.

L'installation d'embarquement **100** comporte au moins une carte d'embarquement **10,** conforme à l'invention, la mémoire **34** comportant des informations relatives à un passager auquel on a délivré ladite carte d'embarquement.

L'installation d'embarquement **100** comporte par ailleurs une zone d'embarquement **102**, par exemple un terminal ferroviaire qui est délimité en plusieurs sous-zones. Dans cet exemple, la zone d'embarquement **102** comporte quatre sous-zones **SZ1, SZ2, SZ3, SZ4.** Dans cet exemple, le véhicule **V** associé à la carte d'embarquement **10** pénètre dans la zone d'embarquement **102** par la première sous-zone **SZ1**. L'entrée dans le quai d'embarquement **104,** qui permet au véhicule **V** d'entrer dans la navette **106,** est située en sortie de la quatrième sous-zone **SZ4**.

Comme évoqué ci-dessus, la carte d'embarquement **10** est collée sur la face intérieure du parebrise du véhicule **V** au moment de son entrée dans la première sous-zone **SZ1**. Le véhicule peut ensuite se déplacer dans les zones **SZ1** à **SZ4.** Chaque sous-zone comporte au moins un lecteur RFID, référencé respectivement **L1, L2, L3, L4**. Chaque lecteur RFID possède un identifiant et est configuré pour lire les informations contenues dans la mémoire **34** de la carte d'embarquement **10,** dites les informations lues, lorsque la carte d'embarquement entre dans la distance de lecture du lecteur RFID.

Par ailleurs, l'installation d'embarquement comporte dans cet exemple plusieurs barrières actionnables, à savoir une première barrière **110** séparant la première sous-zone **SZ1** de la troisième sous-zone, une seconde barrière **112** séparant la troisième sous-zone **SZ3** de la quatrième sous-zone **SZ4** et enfin une troisième barrière **114** séparant la quatrième sous-zone **SZ4** du quai d'embarquement **104.**

L'installation d'embarquement **100** comporte par ailleurs des moyens de localisation **122** reliés aux lecteurs RFID **L1, L2, L3, L4** pour détecter la présence du véhicule muni de la carte d'embarquement **10** dans l'une des sous-zones **SZ1, SZ2, SZ3, SZ4.** Dans cet exemple non limitatif, les moyens de localisation sont disposés dans une console centrale **120.** Sans sortir du cadre de la présente invention, les moyens de localisation pourraient constituer une unité distincte, tel qu'un concentrateur reliés aux différents lecteurs RFID, d'une part, et à la console centrale, d'autre part. De préférence, la console centrale comporte un serveur.

Lorsque la carte d'embarquement **10** est à distance de lecture de l'un des lecteurs RFID **L1, L2, L3, L4,** les informations contenues dans la mémoire **34** sont lues et envoyées à la console centrale **120,** ensemble avec l'identifiant du lecteur RFID qui a lu les informations. En conséquence, les moyens de localisation **122** permettent de déterminer dans laquelle des sous-zones **SZ1, SZ2, SZ3, SZ4** se trouve le véhicule **V.**

Cette localisation est réalisée à partir de l'identifiant contenu dans la mémoire de la carte d'embarquement et de l'identifiant du lecteur RFID ayant transmis à la console centrale l'information lues dans la mémoire de la carte d'embarquement. On comprend que la localisation est possible dès lors que la carte d'embarquement est entrée dans la zone de lecture de l'un des lecteurs RFID.

Les moyens de localisation permettent de suivre le parcours du véhicule dans la zone d'embarquement, tel qu'illustré par une longue flèche sur la figure **7****.** L'invention permet donc de suivre et gérer les flux de passagers au sein de la zone d'embarquement.

Comme illustré en figure **7****,** le passager qui se trouve dans le véhicule V dispose d'un ordinateur portable **130** muni d'un récepteur **132,** par exemple un récepteur de données du type 3G, 4G, WIFI ou tout autre type de protocole de communication.

La console centrale **120** comporte par ailleurs des moyens de transmission **134,** sans-fil, pour transmettre au récepteur **132** de l'ordinateur portable **130** des données qui sont fonction de la sous-zone où la carte d'embarquement a été localisée par les moyens de localisation.

Dans l'exemple de la figure **7**, la carte d'embarquement **10** est à distance de lecture du lecteur RFID **L4** de la quatrième sous-zone, en conséquence de quoi les moyens de localisation détectent la présence du véhicule **V** dans la quatrième sous-zone. Les moyens de transmission **134** de la console centrale **120** adressent alors au récepteur **132,** des informations en lien avec la quatrième sous-zone.

Le véhicule **V** s'apprête à quitter la quatrième sous-zone **SZ4,** de sorte que les informations qui lui sont transmises par les moyens de transmission **134** sont par exemple des consignes à suivre pour garer le véhicule dans la navette.

Toujours en référence à la figure **7****,** on a illustré plus précisément la barrière **114** associée au lecteur RFID **L4** de la quatrième sous-zone **SZ4.** L'installation d'embarquement, et plus précisément la console centrale, comporte des moyens de commande **140** pour actionner la barrière **114.**

Lorsque la carte d'embarquement **10** est à distance de lecture du lecteur RFID **L4,** ce dernier lit les informations contenues dans la mémoire de la carte d'embarquement et les transmet à la console centrale. La console centrale compare l'identifiant contenu dans la mémoire de la carte d'embarquement avec une liste des identifiants autorisés à embarquer dans la navette. Si le véhicule **V** est autorisé à embarquer dans la navette **106,** alors les moyens de commande actionnent la barrière **114** pour l'ouvrir et le véhicule peut être garé dans la navette.

## Revendications

1. Carte d'embarquement (10) comportant une feuille (12) qui présente une première face (14) et une seconde face (16) opposée à la première face (14), la feuille présentant :
une première partie (18) comprenant un dispositif de fixation (20) pour fixer la carte d'embarquement (10) à un support,
une seconde partie (30) comprenant une étiquette RFID (32) comportant une mémoire (34) et une antenne (36), **caractérisée en ce que** le dispositif de fixation (20) comporte une bande adhésive (22) présentant une face adhésive (22a) et une face non-adhésive (22b), opposée à la face adhésive, et **en ce que** la première partie (18) présente un trou (24) qui est recouvert par la bande adhésive (22), la face adhésive (22a) étant fixée à la première face (14) de la feuille (12) de sorte qu'une partie (23) de la face adhésive (22a) débouche dans la seconde face (16) de la feuille (12).

2. Carte d'embarquement selon la revendication 1, dans laquelle la mémoire contient des informations relatives à un passager.

3. Carte d'embarquement selon l'une quelconque des revendications précédentes, comprenant en outre un opercule (26) qui est amovible et qui comporte une face de protection (26a) coopérant avec ladite partie de la face adhésive qui débouche dans la seconde face de la feuille.

4. Carte d'embarquement selon la revendication 3, dans laquelle l'opercule (26) présente les mêmes dimensions que le trou (24).

5. Carte d'embarquement selon la revendication 4, dans laquelle l'opercule (26) comporte une plus grande dimension (a) qui est sensiblement égale à la moitié de la largeur (e) de ladite feuille.

6. Carte d'embarquement selon l'une quelconque des revendications précédentes, dans laquelle l'étiquette RFID (32) est fixée sur la première face (14) de la feuille (12).

7. Carte d'embarquement selon l'une quelconque des revendications 1 à 6, dans laquelle la feuille comporte deux couches (12a,12b) collées l'une à l'autre, et dans laquelle l'étiquette RFID (32) est disposée entre les deux couches (12a,12b).

8. Carte d'embarquement selon l'une quelconque des revendications précédentes, dans laquelle la feuille (12) présente une direction longitudinale (X), et en ce que l'antenne (36) de l'étiquette RFID (32) présente une plus grande longueur (C) qui s'étend selon la direction longitudinale (X) de la feuille.

9. Carte d'embarquement selon l'une quelconque des revendications précédentes, dans laquelle l'étiquette RFID (32) s'étend sensiblement au milieu de la largeur (l) de la seconde partie (30) de la feuille (12).

10. Carte d'embarquement selon l'une quelconque des revendications précédentes, dans laquelle la première partie (18) présente la forme d'un crochet (50) qui constitue le dispositif de fixation.

11. Installation d'embarquement (100) comportant :
au moins une carte d'embarquement selon l'une quelconque des revendications précédentes, la mémoire (34) comportant des informations relatives à un passager ;
une zone d'embarquement (102) comprenant plusieurs sous-zones (SZ1,SZ2,SZ3,SZ4) munies de lecteurs RFID (L1,L2,L3,L4) apte à lire les informations contenues dans la mémoire (34), dites les informations lues ;
des moyens de localisation (122) reliés aux lecteurs RFID (L1,L2,L3,L4) des sous-zones pour détecter la présence de la carte d'embarquement (10) dans l'une des sous-zones (SZ1,SZ2,SZ3,SZ4) à l'aide des informations lues.

12. Installation d'embarquement (100) selon la revendication 11, **caractérisée en ce qu'**elle comporte en outre des moyens de transmission (134) pour transmettre à un récepteur (132) d'un ordinateur portable (130) des données qui dépendent de la sous-zone où la carte d'embarquement a été localisée par les moyens de localisation.

13. Installation d'embarquement selon la revendication 11 ou 12, **caractérisée en ce qu'**au moins l'une des sous-zones (SZ4), dite la première sous-zone, comporte une barrière (114) associée au lecteur RFID (L4) de la première sous-zone, et **en ce que** l'installation d'embarquement comporte en outre des moyens de commande (140) pour actionner la barrière (114) lorsque la carte d'embarquement (10) est localisée par le lecteur RFID (L4) dans la première sous-zone par les moyens de localisation (122).

## Patentansprüche

1. Bordkarte (10), die einen Bogen (12), der eine erste Seite (14) und eine zweite Seite (16) entgegengesetzt zu der ersten Seite (14) aufweist, beinhaltet, wobei der Bogen aufweist:
einen ersten Teil (18), umfassend eine Anbringungsvorrichtung (20) zum Anbringen der Bordkarte (10) an einem Träger,
einen zweiten Teil (30), umfassend ein RFID-Etikett (32), das einen Speicher (34) und eine Antenne (36) beinhaltet, **dadurch gekennzeichnet, dass** die Anbringungsvorrichtung (20) einen Klebestreifen (22) beinhaltet, der eine klebende Seite (22a) und eine nichtklebende Seite (22b) aufweist, die entgegengesetzt zu der klebenden Seite ist, und dass der erste Teil (18) ein Loch (24) aufweist, das von dem Klebestreifen (22) abgedeckt wird, wobei die klebende Seite (22a) an der ersten Seite (14) des Bogens (12) angebracht wird, so dass ein Teil (23) der klebenden Seite (22a) in der zweiten Seite (16) des Bogens (12) hervorkommt.

2. Bordkarte nach Anspruch 1, wobei der Speicher Informationen in Bezug auf einen Passagier enthält.

3. Bordkarte nach einem der vorhergehenden Ansprüche, ferner umfassend einen Deckel (26), der abnehmbar ist und der eine Schutzseite (26a) beinhaltet, die mit dem Teil der klebenden Seite, der in der zweiten Seite des Bogens hervorkommt, zusammenwirkt.

4. Bordkarte nach Anspruch 3, wobei der Deckel (26) die gleichen Abmessungen wie das Loch (24) aufweist.

5. Bordkarte nach Anspruch 4, wobei der Deckel (26) eine größere Abmessung (a) beinhaltet, die im Wesentlichen gleich der Hälfte der Breite (e) des Bogens ist.

6. Bordkarte nach einem der vorhergehenden Ansprüche, wobei das RFID-Etikett (32) auf der ersten Seite (14) des Bogens (12) angebracht wird.

7. Bordkarte nach einem der Ansprüche 1 bis 6, wobei der Bogen zwei Schichten (12a, 12b) beinhaltet, die aneinandergeklebt sind, und wobei das RFID-Etikett (32) zwischen den zwei Schichten (12a, 12b) angeordnet ist.

8. Bordkarte nach einem der vorhergehenden Ansprüche, wobei der Bogen (12) eine Längsrichtung (X) aufweist, und wobei die Antenne (36) des RFID-Etiketts (32) eine größere Länge (C) aufweist, die sich gemäß der Längsrichtung (X) des Bogens erstreckt.

9. Bordkarte nach einem der vorhergehenden Ansprüche, wobei das RFID-Etikett (32) sich im Wesentlichen in der Mitte der Breite (l) des zweiten Teils (30) des Bogens (12) erstreckt.

10. Bordkarte nach einem der vorhergehenden Ansprüche, wobei der erste Teil (18) die Form eines Hakens (50) aufweist, der die Anbringungsvorrichtung bildet.

11. Boarding-Anlage (100), die beinhaltet:
mindestens eine Bordkarte nach einem der vorhergehenden Ansprüche, wobei der Speicher (34) Informationen in Bezug auf einen Passagier beinhaltet,
eine Boarding-Zone (102), umfassend mehrere Teilzonen (SZ1, SZ2, SZ3, SZ4), die mit RFID-Lesegeräten (L1, L2, L3, L4) ausgestattet sind, die dazu geeignet sind, die Informationen, die in dem Speicher (34) enthalten sind, die sogenannten gelesenen Informationen, zu lesen,
Lokalisierungsmittel (122), die mit den RFID-Lesegeräten (L1, L2, L3, L4) von Teilzonen verbunden sind, zum Erfassen der Gegenwart der Bordkarte (10) in einer der Teilzonen (SZ1, SZ2, SZ3, SZ4) mithilfe der gelesenen Informationen.

12. Boarding-Anlage (100) nach Anspruch 11, **dadurch gekennzeichnet, dass** sie ferner Übertragungsmittel (134) zum Übertragen von Daten, die von der Teilzone abhängen, in der die Bordkarte von den Lokalisierungsmitteln lokalisiert wurde, an einen Empfänger (132) eines tragbaren Computers (130) beinhaltet.

13. Boarding-Anlage nach Anspruch 11 oder 12, **dadurch gekennzeichnet, dass** mindestens eine der Teilzonen (SZ4), die sogenannte erste Teilzone, eine Schranke (114) beinhaltet, die mit dem RFID-Lesegerät (L4) der ersten Teilzone in Verbindung steht, und dass die Boarding-Anlage ferner Steuermittel (140) zum Betätigen der Schranke (114), wenn die Bordkarte (10) von dem RFID-Lesegerät (L4) in der ersten Teilzone von den Lokalisierungsmitteln (122) lokalisiert wird, beinhaltet.

## Claims

1. A boarding pass (10) including a sheet (12) which has a first face (14) and a second face (16) opposite to the first face (14), the sheet having:
a first part (18) comprising an attachment device (20) to attach the boarding pass (10) to a support,
a second part (30) comprising an RFID tag (32) including a memory (34) and an antenna (36), **characterized in that** the attachment device (20) includes an adhesive strip (22) having an adhesive face (22a) and a non-adhesive face (22b), opposite to the adhesive face , and **in that** the first part (18) has a hole (24) which is covered by the adhesive strip (22), the adhesive face (22a) being attached to the first face (14) of the sheet (12) so that a part (23) of the adhesive face (22a) opens into the second face (16) of the sheet (12).

2. The boarding pass according to claim 1, wherein the memory contains information relating to a passenger.

3. The boarding pass according to any one of the preceding claims, further including a cap (26) which is removable and which includes a protective face (26a) cooperating with said part of the adhesive face which opens into the second face of the sheet.

4. The boarding pass according to claim 3, wherein the cap (26) has the same dimensions as the hole (24).

5. The boarding pass according to claim 4, wherein the cap (26) includes a larger dimension (a) which is substantially equal to half the width (e) of said sheet.

6. The boarding pass according to any one of the preceding claims, in which the RFID tag (32) is attached to the first face (14) of the sheet (12).

7. The boarding pass according to any one of claims 1 to 6, wherein the sheet includes two layers (12a, 12b) glued to each other, and wherein the RFID tag (32) is disposed between the two layers (12a, 12b).

8. The boarding pass according to any one of the preceding claims, wherein the sheet (12) has a longitudinal direction (X), and in that the antenna (36) of the RFID tag (32) has a greater length (C) which extends along the longitudinal direction (X) of the sheet.

9. The boarding pass according to any one of the preceding claims, wherein the RFID tag (32) extends substantially in the middle of the width (I) of the second part (30) of the sheet (12).

10. The boarding pass according to any one of the preceding claims, wherein the first part (18) has the form of a hook (50) which constitutes the attachment device.

11. A boarding facility (100) including:
at least one boarding pass according to any one of the preceding claims, the memory (34) including information relating to a passenger;
a boarding area (102) comprising several sub-areas (SZ1, SZ2, SZ3, SZ4) equipped with RFID readers (LI, L2, L3, L4) able to read the information contained in the memory (34), called the read information;
locating means (122) connected to the RFID readers (LI, L2, L3, L4) of the sub-areas to detect the presence of the boarding pass (10) in one of the sub-areas (SZ1, SZ2, SZ3, SZ4) using the read information.

12. The boarding facility (100) according to claim 11, **characterized in that** it further includes transmission means (134) for transmitting, to a receiver (132) of a portable computer (130), data which depend on the sub-area where the boarding pass has been located by the locating means.

13. The boarding facility according to claim 11 or 12, **characterized in that** at least one of the sub-areas (SZ4), called the first sub-area, includes a barrier (114) associated with the RFID reader (L4) of the first sub-area, and **in that** the boarding facility further includes control means (140) for actuating the barrier (114) when the boarding pass (10) is located by the RFID reader (L4) in the first sub-area by the locating means (122).
